# EUROPEAN PATENT SPECIFICATION

(11) **EP 3 584 168 B1**
(45) Date of publication and mention of the grant of the patent: **07.09.2022**
(21) Application number: 18382444.0
(22) Date of filing: 20.06.2018
(51) Int. Cl.: B64D 41/00, B64D 35/02, B64C 11/28, B64D 27/02, F02C 6/20

(54) **TURBOMACHINERY FOR AN AIRCRAFT**
TURBOMASCHINE FÜR EIN FLUGZEUG
TURBOMACHINE POUR AÉRONEF

(43) Date of publication of application: 25.12.2019
(73) Proprietor: Airbus Operations, S.L.U., 28906 Getafe (Madrid) (ES)
(72) Inventor: FERNÁNDEZ LÓPEZ, Pio, E-28906 Getafe - Madrid (ES)
(74) Representative: ABG Intellectual Property Law, S.L.

(56) References cited:
- EP-A1- 2 977 314
- EP-A1- 2 995 555
- EP-A1- 3 257 753
- DE-A1-102013 209 538
- US-A1- 2018 163 558

## Description

### TECHNICAL FIELD OF THE INVENTION

The present invention belongs to the field of aircraft engines, and particularly, it belongs to the field of multi-functional turbomachinery to be used either as a turboprop engine, or as an energy generation source for supplying aircraft's equipment.

In particular, an object of the present invention is to provide a multi-functional turbomachinery which can continue supplying energy to aircraft's equipment even in emergency situations, in which propulsive sources or other power sources have failed.

### BACKGROUND OF THE INVENTION

Existing aircrafts typically include one or more primary engines for propulsion, the type of which may vary depending on the intended flight regime of the aircraft (mainly dependent on both flight Mach and altitude). For instance, turboprop engines, this is, a variant of a jet engine that has been optimized to drive a propeller, are designed to flight at subsonic speed (i.e. Mach less than 1) since it is likely to reach sonic speed at the propeller tip due to its higher rotational speed well before at any other rotational part of the engine, and thus, unbalancing the engine performance.

Particularly, aircrafts mounting turboprop engines are of special interest at flight regime of lower flight speed (i.e. less than Mach 0.6), at which they become very efficient in terms of burning less fuel per seat-mile and requiring significantly less runway for takeoff and landing in comparison with a turbojet or turbofan powered aircraft of the same size.

These advantages make turboprop engines to be used over relatively short distances being a common choice for most commuter aircrafts, in which cost and performance benefits offset the abovementioned lower speed. Unfortunately, these commuter aircrafts are of reduced space (and weight), being a current target maximizing the seat number available or cargo volume.

Regarding the turboprop engine *per se,* it uses the same principles as a turbojet to produce energy, that is, it incorporates a power unit which in turn drives a propeller by a powershaft. The primary difference between the turbopropeller and a conventional turbojet is that additional turbines in the power unit, a power shaft and, optionally, a reduction gearbox have been incorporated into the design to drive the mentioned propeller.

The gearbox or connection section may be driven either by the same turbines and shaft that drives the engine compressor, mechanically linking the propeller and the engine; or the turbines may be separate with the power turbine driving a concentric, mechanically isolated shaft to power the gearbox (*so-called 'free power turbine'*). In either case, the turbines extract almost all of the energy from the exhaust stream using some of it to power the engine compressor and the rest to drive the propeller.

Aircrafts may also include at least one Auxiliary Power Unit (this is, 'APU'), which are used to provide power to the aircraft when the primary *-propulsive-*engines are not running, for example,
- at *on-ground end,* it allows the aircraft to operate autonomously without reliance on-ground support equipment; and
- at *airborne end,* it can also be used as a source of bleed air for starter assist for an in-flight engine relight or to power the air-conditioning packs in the event of an engine-out condition or other minor emergency situations.

In normal flight condition, APU provides electrical power to aircraft systems as well as bleed air for air conditioning and for engine start.

Apart from APU, typical aircrafts incorporates a deployable small windmill (Ram Air Turbine, commonly known by the acronym 'RAT') intended to be deployed and used as an alternate or emergency power source to the aircraft (hydraulic or electrical) in case of emergency. These emergency situations include loss of both primary and auxiliary power sources, at which the RAT will power vital systems such as: flight controls, linked hydraulics, and flight-critical instrumentation; generating power from the airstream by ram pressure, due to the speed of the aircraft.

Under normal conditions (i.e. no emergency situation), the RAT is stowed in a compartment in the fuselage (or wing), being deployed manually or automatically following a complete loss of AC power. Nevertheless, this architecture change is not instantaneous, and it requires additional batteries to power essential instrumentation during the interval between power loss and RAT deployment.

Current practice knows the existence of conventional APU and RAT as completely separated systems placed at respective separate parts of the aircraft. While APU provides auxiliary power, the RAT is used as source of emergency power.

Accordingly, APU system, RAT system (when stowed) and additional equipment such as batteries all together represents a considerable space to be occupied once installed and thus, its impact on the final aircraft arrangement has to be planned cautiously in order to not affect either the systems efficiency or aircraft useful volume.

Furthermore, the impact of this considerable space to be left, exclusively dedicated to these systems, is emphasized in most commuter or regional aircrafts, such as turboprop aircrafts, because of their reduced available space in comparison with narrow/wide-body or even single-aisle aircrafts.

Document US 2018/163558 A1 describes a propulsion system which includes a propulsor having a driveshaft, an electric machine coupled to the driveshaft of the propulsor, and a combustion engine having an output shaft. The propulsion system additionally includes a one-way clutch operable with at least one of the driveshaft of the propulsor and the output shaft of the combustion engine.

Document EP 2977314 A1 describes a power generation unit for generating electric power within a rotating reference frame that includes a generator and a gear assembly.

Document EP 2995555 A1 describes a propulsion system and related methods.

Document DE102013209538A1 describes a hybrid drive for a power-driven aircraft.

### SUMMARY OF THE INVENTION

The present invention provides a solution for the aforementioned problems, by turbomachinery for an aircraft according to claim 1, an aircraft according to claim 13, and a method for continuing driving a power conversion section of the turbomachinery according to claim 14. In dependent claims, preferred embodiments of the invention are defined.

Throughout this entire document, 'turbomachinery' will be understood as a machine that transfers energy between a rotor and a fluid. In particular, the turbomachinery according to the invention acts as a turboprop engine by default (this is, during normal aircraft operation).

It is to be noted that, for fulfilling the requirement that the turbomachinery according to the invention can 'act as a turboprop engine' by default, the propelling section needs to face the airstream (this is, being exposed to the incoming airflow). Accordingly, the propelling section is not be deployable or stowed as needed.

In this sense, if the 'turbomachinery acts as a turboprop', a fraction of exhaust thrust of the power unit is sacrificed in favor of shaft power, which is obtained by extracting additional power (up to that necessary to drive the compressor) from turbine expansion.

Since a fraction of exhaust thrust is transferred to the propelling section, exhaust typically produces around or less than 10% of the total thrust; wherein a higher proportion of the thrust comes from the propeller at low speeds and less at higher speeds (mainly ruled by the 'bypass ratio' which varies up to 50-100).

Unlike conventional turboprop, the power conversion is drivable also by the propelling section; that is, due to the exposure to the airstream of said propelling section, it is forced and induces rotation over the first shaft part which in turn drives the power conversion section. In other words, the power to drive the power conversion can be reverted in direction.

Therefore, the propelling section of the invention is configured to act as both:
i. a windmill which generates sufficient power in the shaft at relatively low airspeeds (i.e. descent or gliding in emergency situations), and
ii. an open-compression stage to provide thrust according to a conventional propeller of a turboprop.

It will be noticed for a person skilled in the art that a propelling section acting as a windmill or as open-compression stage significantly differs in design. Particularly, since conventional windmills bring excessive drag at high speed, a person skilled in the art will be discouraged to use the same propeller in dual function since they become inefficient in a non-intended work situation.

However, it has been surprisingly observed that designing the propellers in a compromise solution between those 2 different positions, it makes the turbomachinery full-operative. Preferably, the propellers are to be designed prevailing the compression stage characteristics over the windmill ones.

As it was briefly discussed, the 'conversion section' associated to the intermediate shaft is drivable by either the propelling section, or by the power unit. In case the power unit is a gas turbine and it drives the conversion section (as a conventional turboprop does), the common shaft may be integral with the one which also drives the engine compressor; or the turbines may be separate in a *'free power turbine'* configuration.

In this sense, the shaft is longitudinally placed within the turbomachinery.

Hence, each of the three basic components of the turbomachinery is associated to one of these shaft parts in order to rotate jointly over a longitudinal axis of the turbomachinery.

Further, the power conversion section is configured to convert the energy extracted from the intermediate shaft part into another suitable form, e.g. electrical, hydraulic, or pneumatic. This converted energy shall energize aircraft equipment as necessary.

Taking into consideration all the aforementioned features, the present invention advantageously provides a single turbomachinery which unifies both the propulsive function with the power generation function in case of emergency. The switch from one function to the other is produced by a simple mechanism of coupling means which is easy-to-handle, simple and economic.

Accordingly, the drawback of reduced space in commuter aircrafts is drastically diminished since the APU and RAT can be unified into the same turbomachinery within this invention. Besides, the conventional RAT is replaced by a propeller section placed outside the aircraft instead of stowed, and which assist the conventional APU (power unit in the present invention) to jointly act as a turboprop engine.

Moreover, a person skilled in the art shall recognize that the present turbomachinery can either replace the current turboprop or being installed as an additional turbomachinery into an aircraft which already has one.

In this latter scenario, it is to be noticed that current APU's have a similar configuration and behavior than most power units of a turboprop. Therefore, even in case an aircraft already comprise an APU, it can be reconfigured to act as a turbomachinery according to the present invention, which provides advantages such as surplus thrust, and redundant safety equipment to continue generating power to the aircraft in case of emergency.

In a preferred embodiment, the power unit of the turbomachinery is a gas turbine.

Although the most common power unit to be found nowadays in aircrafts is a gas turbine; optionally, other reciprocating engines may be envisaged to drive the turbomachinery, like propeller engines, for instance. Nevertheless, propellers engines lose efficiency as aircraft speed increases, so turboprop allow higher-speed aircraft up to Mach 0.6 - 0.7, and higher flight altitudes as well.

Also, with the advent of full-electrical aircrafts, the power unit according to the invention can be batteries associated to the second part of the shaft to drive it.

Advantageously, gas turbines are well-known because of their high thrust-volume ratio, in comparison with conventional reciprocating engines. Therefore, this embodiment aims the maximizing of available volume for passengers or cargo within a particular aircraft.

In a particular embodiment, the turbomachinery is configured to operate in one of at least three configurations:
- a 'turboprop mode' when both coupling means are coupling their respective shaft parts, the turbomachinery acting as a turboprop engine;
- a 'Ram Air Turbine mode' by uncoupling the second coupling means, the propelling section acting as a windmill which drives the power conversion section; and
- an 'Auxiliary Power Unit mode' of an aircraft by uncoupling the first coupling means, the power unit driving the power conversion section.

As it was already mentioned, the power to drive the power conversion can be dynamically reverted in direction, from power unit to propeller (i.e. turboprop) through power conversion section; or *vice-versa,* from propelling section to power conversion section.

In a particular embodiment, the propelling section is of the variable pitch type.

This is, the at least two blades are configured to change its pitch. The pitch refers to the angle between the propeller blade chord line and the plane of rotation of the propeller.

In variable-pitch propellers, the blade pitch is adjustable to its optimum value for the phase of flight, be it takeoff, climb, cruise, approximation or landing. In overall, the purpose is to maintain propeller efficiency by a mechanism that alters the correct pitch relative to the airspeed.

In a preferred embodiment, the variable pitch propeller is of the constant speed type which maintains the same RPM irrespective of throttle lever or airspeed.

In a particular embodiment, each of the at least two blades are configured to be positioned in at least one of the following depending on the aircraft operation:
- 'fully feathered' position, preferably during taxiing and take-off of the aircraft;
- 'flat pitch' position, preferably during approach and landing of the aircraft; and
- 'un-feathered' position, preferably during climb and cruise of the aircraft.

That is, the pitch can be adjusted from a wide range of angles, wherein 'fully feathered' pitch position refers to a low pitch angle which yields good low speed acceleration. On the contrary, 'un-feathered' pitch position refers to a higher pitch angle which yields optimum high speed performance and fuel economy.

'Flat pitch' position carries with high drag due to the high wet area of the blades, which may be of special interest during approach and landing of the aircraft to assist in deceleration.

According to the invention, the at least two blades of the propeller section are configured to be folded once the first coupling means uncouples the first part of the shaft to the remainder shaft part.

In a particular embodiment, the at least two blades are positioned into the 'flat pitch' position during folding/un-folding maneuvers.

Advantageously, this position of the blades eases the hinge rotation during folding/un-folding maneuvers. Moreover, blades into 'flat pitch' position yield almost no resistance which aims to not deflect the blades (i.e. avoiding being bended) and correctly unfold them.

In a particular embodiment, in the Ram Air Turbine mode, the at least two blades are configured to be positioned into the 'un-feathered' position. Hence, the pitch is adjusted to maximize efficiency at low aircraft speed.

In a particular embodiment, the propelling section is adapted to be arranged at the forward end of the turbomachinery. In this architecture, the turbomachinery act as a tractor turboprop engine when both first and second coupling means couple their respective shaft parts.

In a particular embodiment, the propelling section is adapted to be arranged at the rear end of the turbomachinery. In this architecture, the turbomachinery acts as a pushing turboprop engine when both first and second coupling means couple their respective shaft parts.

This configuration is of special relevance in case current APU are to be reconfigured into the turbomachinery according to the present invention. Since most of APU are installed nowadays in the tail cone of the aircraft, the force provided by the propeller is *pushing towards* the engine, rather than away as in conventional tractor configuration.

Similarly, the turbomachinery according to this embodiment can also act as an 'open rotor pusher' engine.

In a particular embodiment, the turbomachinery further comprises actuation means operatively associated with the first and second coupling means, for coupling and uncoupling the same.

Particularly, the actuation means can either manually or automatically couple or uncouple the respective according to the airworthiness actuation rules of the aircraft in which they are installed.

In a particular embodiment, the power conversion section is configured to convert the energy from the rotation of the intermediate shaft part into at least one of the following forms:
- electrical, the power conversion section comprising an electric power generator,
- pneumatic, the power conversion section comprising a pneumatic pump, and/or
- hydraulic, the power conversion section comprising an hydraulic pump.

A person skilled in the art should recognize that this list is not exhaustive and the particular generator will depend on the aircraft type. For example, engine-starters may also be envisaged within the power conversion section.

In a particular embodiment, the power conversion section further comprises a gearbox within the intermediate shaft part in order to convert the high RPM of the second shaft part from the power unit into low RPM for driving the propeller section.

In a particular embodiment, each of the at least two blades is configured to fit in a corresponding well when folded.

In a second inventive aspect, the invention provides an aircraft comprising a turbomachinery according to any of the embodiments of the first inventive aspect, wherein the aircraft is at least one of the following types:
- small category aircrafts such as light aircrafts, or
- medium-sized aircraft such as regional aircraft or commuter aircraft, or
- unmanned aerial system.

With the advent of new, technologically advanced UAS, the turbomachinery of the present invention can be retrofitable to any aircraft which fulfils at least that:
- already incorporates a power unit, preferably a gas turbine, and
- it is intended to flight at subsonic regime, preferably below 0.7 Mach.

Preferably, the turbomachinery of the present invention can be retrofitable to any aircraft that already incorporates the power unit and uses a turboprop or even a turbofan. Among them, typical aircraft types which fall into former definition may be: regional aircraft, commuter aircraft, medium/small-sized passenger aircraft, turboprop airliner, light aircraft, or the like.

In a third inventive aspect, the invention provides a method for continuing driving the power conversion section of a turbomachinery according to any of the embodiments of the first inventive aspect, in case of a malfunction in the power unit thereof. Particularly, the method comprises the steps of:
- providing a turbomachinery acting as a turboprop engine by default,
- detecting a malfunction in the power unit operation, such as breakdown or abnormal speed alterations,
- uncoupling the second coupling means, and
- the at least two blades of the propelling section forced by airstream induce rotation over the first shaft part which in turn drives the power conversion section.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic lay-out of an embodiment of the turbomachinery for an aircraft according to the invention.
- Figures 2a-2c: These figures show particular configurations of the turbomachinery according to the invention, in particular operating in 'turboprop, 'Ram Air Turbine', and 'Auxiliary Power Unit' modes, respectively.
- Figure 3a-3c: These figures show different propeller blade sections, one optimized to provide thrust only (according to prior art), and other according to the present invention acting as open-compression stage ('turboprop mode') and as windmill ('Ram Air Turbine' mode), respectively.
- Figures 4a-4b: These figures schematically show a preferred embodiment regarding folding/un-folding maneuvers of the at least two blades of the propeller section.
- Figures 5a, 5b: These figures show a schematic view of an commuter aircraft comprising a turbomachinery according to the invention, and a detailed view of the turbomachinery with folded blades.
- Figures 6a-6e: These figures show different examples of aircrafts incorporating a turbomachinery according to the present invention.

### DETAILED DESCRIPTION OF THE INVENTION

For illustrative and non-limitative purposes, it will be shown the propelling section (2) associated to a first part of the shaft comprising two blades (2.1) hereinafter.

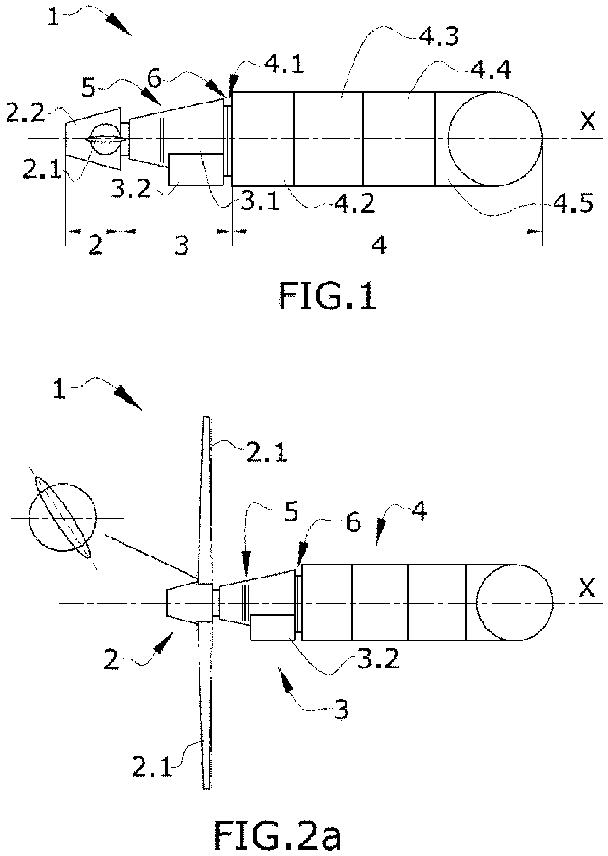

Figure 1 depicts a schematic embodiment of a turbomachinery (1) according to the invention. As it can be seen, the turbomachinery basically comprises:
- a propelling section (2),
- a power conversion section (3), and
- a power unit (4).

In particular, the power unit (4) has been depicted as a gas turbine, which in turn comprises an intake (4.1) to ingest airstream, a compressor (4.2), a combustor (4.3), turbines (4.4), and an exhaust (4.5). Alternatively, the power unit may be a reciprocating engine or batteries (not shown in these figures).

The turbomachinery (1) further comprises a common shaft sectioned in at least three parts to transfer power from one part to another. Therefore, each of the three basic components of the turbomachinery is associated to one of these shaft parts in order to rotate jointly:
- the propelling section (2) is associated to a first part of the shaft,
- the gas turbine (4) is associated to a second part of the shaft, and
- the power conversion section (3) associated to an intermediate shaft part.

This shaft is positioned on the longitudinal axis (X) of the turbomachinery to allow those sections rotating over it.

These at least three shaft parts are brought together by respective coupling means, a first (5) and a second (6), respectively. The first coupling means (5) is configured to couple/uncouple the first part of the shaft with the intermediate one; while the second coupling means (6) is configured to couple/uncouple the intermediate part of the shaft with the second one.

In a preferred embodiment of the invention, those first (5) and second (6) coupling means are clutches adapted to be operated by respective actuation means (*not shown in these figures*). In this sense, there is a large number of clutch mechanism and associated clutch actuation mechanism already known in the State-of-Art, for instance: mechanical, hydraulic, electro-mechanic, etc.

In order to ease the configuration switch related to different operation modes of the turbomachinery (1), in an embodiment, the actuation means may be ruled by the airworthiness actuation rules which conventionally deployed the RAT, this is, under the same aircraft conditions and flight parameters.

In particular, it should be noticed that, in case the first coupling means (5) uncouples its respective shaft parts, the propelling section (2) can freely rotate under the faced airstream. Thus, the propelling section (2) comprises a hub at which the at least two blades (2.1) are attached, the hub being equivalent to a spinner (2.2) associated to the first shaft part.

That propelling section (2) is of the variable pitch type; particularly, it maintains substantially the same RPM irrespective of throttle lever or airspeed.

Since most turboprop engines produce their maximum thrust in a very narrow speed band, constant-speed propeller system permits selecting the propeller speed appropriate to the flight situation and then automatically maintains that RPM under varying conditions of aircraft altitude, airspeed, phase of flight and engine power (i.e. power lever position).

A person skilled in the art recognizes that different mechanisms can be used for the variable pitch propeller, such as the combination of speeder spring and a set of fly weights to get a constant speed propeller.

In addition, the propelling section (2) further comprises a mechanism (*not shown*) to allow the at least two blades (2.1) to be folded along the direction of the shaft. This mechanism is activated once the first coupling means (5) uncouples the first part of the shaft to the remainder shaft part; that is, when there is no power transferred to the propelling section (2) and it is able to rotate freely.

Upon such folding maneuver, such at least two blades (2.1) are configured to fit in a corresponding well (*not shown*) in order to reduce drag, or for avoiding its freely rotation which may affect to the overall aircraft performance.

Regarding the power conversion section (3), it is configured to extract power from the associated intermediate shaft, and convert it into another form which better suits the aircraft needs. For example, the power conversion section may comprise electric power generator (3.2), and/or a pneumatic pump, and/or a hydraulic pump as appropriate.

Advantageously, according to the present turbomachinery (1), this power conversion section (3) can be feed (i.e. its associated intermediate shaft part driven) by either the propelling section (2), or by the power unit (4). Thus, it is allowed to continue supplying energy to aircraft's equipment even in emergency situations since this multi-functional turbomachinery dynamically reconfigures itself.

In addition, in case the second shaft part associated to the power unit (4) rotates at high RPM, it is necessary to provide the power conversion section (3) with a gearbox (3.1) in order to convert said high RPM into appropriate low RPM which does not jeopardize the structural integrity of the driven propeller section (2).

Figures 2a to 2c depicts the turbomachinery (1) of figure 1 in various configurations, in particular operating in 'turboprop', 'Ram Air Turbine', and 'Auxiliary Power Unit' modes, respectively.

In figure 2a, it is shown the turbomachinery (1) in the 'turboprop mode' configuration, this is, the configuration by default. Both first (5) and second (6) coupling means are coupling their respective shaft parts allowing the turbomachinery acting as a turboprop engine.

As it was briefly discussed above, in 'turboprop mode', a fraction of exhaust thrust of the power unit (4) is sacrificed in favor of shaft power to be transferred to the propelling section (2) which shall act as an open-compression stage.

Because this configuration is meant for the majority of the flight (i.e. climb and cruise of the aircraft), it can be observed that the at least two blades (2.1) are in 'un-feathered' position.

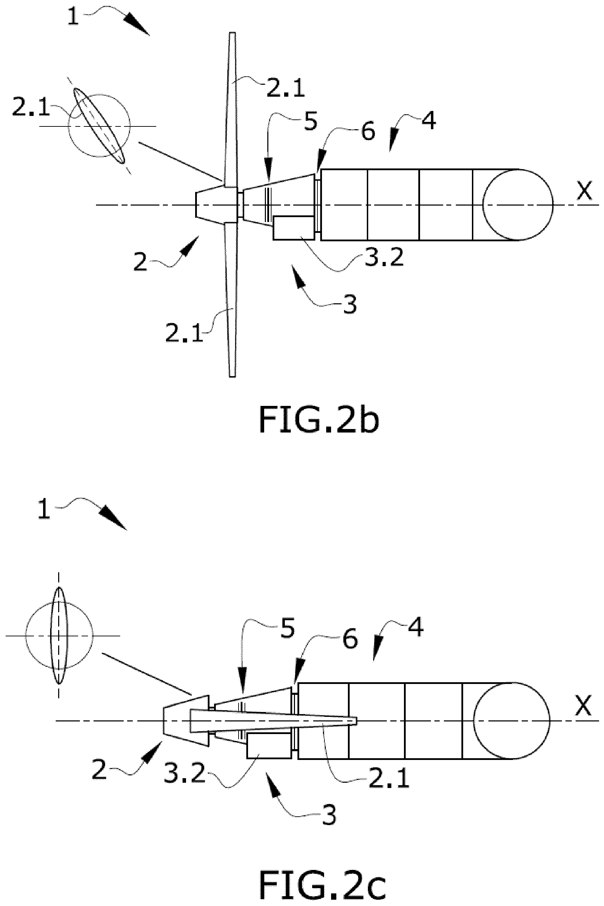

In figure 2b, it is shown the turbomachinery (1) in the configuration of 'RAT mode', this is, the meant configuration when both power unit (4) and propulsive engines (if any) have failed or are inoperative. The second coupling means (6) is uncoupled and the propelling section (2) acts as a windmill which in turn will drive the power conversion section (3) to continue energizing aircraft equipment.

This configuration is exclusive of very rare emergency situations, where aircraft vital systems need to be powered uninterrupted. In this configuration, the at least two blades (2.1) are in 'un-feathered position' in order to continue rotating even during descent at low speed.

In figure 2c, it is shown the turbomachinery (1) in the configuration of 'Auxiliary Power Unit mode', this is, the meant configuration when the power unit (4) act as a pure Auxiliary Power Unit exclusively driving the power conversion section (3), while disregards the propelling section (2). Accordingly, the first coupling means (5) is uncoupled.

For exemplary reasons, the at least two blades (2.1) are shown folded since no power is intended to be neither given nor extracted from the propelling section (2). Accordingly, no drag is produced by the at least two blades (2.1). In a preferred embodiment, said blade fits in a corresponding well (*not shown*).

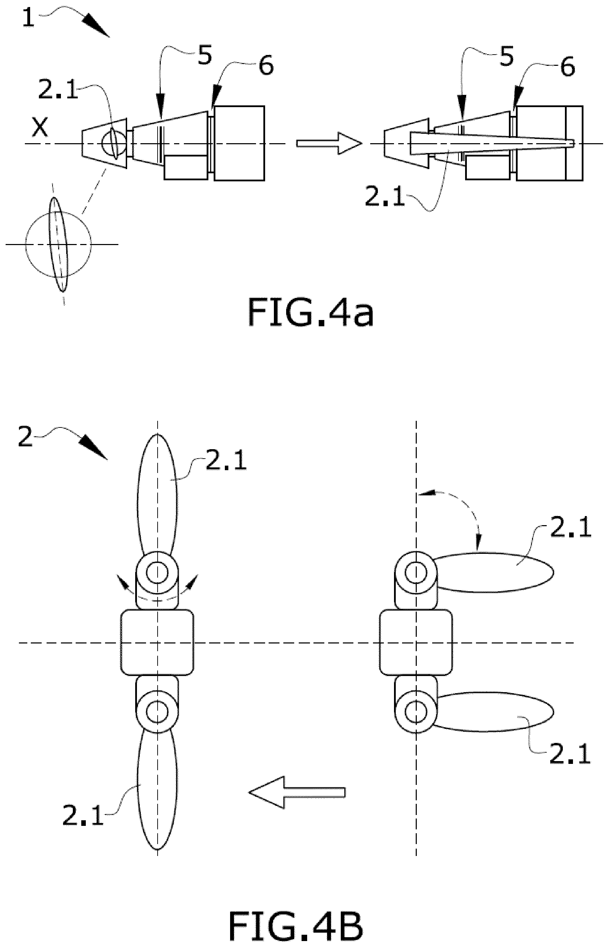

In this configuration, the at least two blades (2.1) are in 'flat pitch' position because of the folding maneuver, which can be seen in more detail within figures 4a and 4b.

Regarding the blade section and characteristics, 'camber' is defined as the convexity of the curve of blade section from the leading edge to the trailing edge. The upper surface of the blade section normally has a positive camber while the lower surface may have a positive (convex), zero (flat) or negative (concave) camber as appropriate for the intended use.

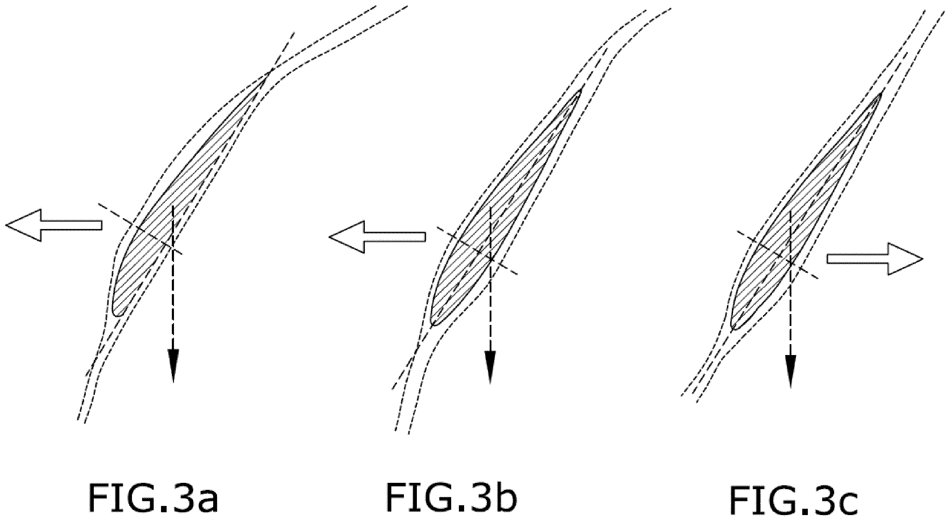

Figure 3a depicts a typical propeller blade section of a blade optimized to provide thrust only according to the prior art. As it can be seen, the upper camber is substantially curved, whilst the lower camber is flat, thus resulting in a zero camber. The dashed-line arrow pointing downwards indicates the blade advance direction; while the wider arrow pointing leftwards indicates the resulting force in the blade, in this case the thrust produced.

Figure 3b schematically depicts one of the two blades of the propelling section of the present invention designed in a compromise solution. In particular, this blade presents curvature in both the upper and lower cambers in order to provide thrust (represented with the wide arrow leftwards) acting as an open-compression stage in the 'turboprop mode'.

On the contrary, since this blade of the present invention designed in a compromise solution must act also as a windmill, a representation of the blade section in 'Ram Air Turbine' mode is shown in figure 3c. Accordingly, instead of thrust (wide arrow leftwards), it is depicted the resulting force on the blade section rightwards *-drag-* (see wide arrow), thus generating power in the shaft at relatively low airspeeds.

As a consequence, the blades can act at both situations, making the turbomachinery full-operative. Preferably, the propellers are designed prevailing the compression stage characteristics over the windmill ones.

Figure 4a schematically shows the un-folding maneuver of the at least two blades (2.1) of the propeller section (2). In particular, said at least two blades are in 'flat pitch' position which ease the hinged rotation and allows the wider section of the blade being closer to the turbomachinery in a more aerodynamic way.

Preferably, once folded, at least two blades (2.1) are retained along the turbomachinery in order not to be accidentally un-folded forced by the surrounding airstream.

A person skilled in the art should recognize different mechanisms to allow such folding/un-folding maneuvers. For instance, it can be used the mechanism of figure 4b, in which two-axis rotating mechanism is used. A radial axis allows the pitch to vary (represented with an arrow in left figure of 4b), while the other axis is design as a hinge rotation point to permit the folding/un-folding maneuvers (represented with an arrow in right figure of 4b).

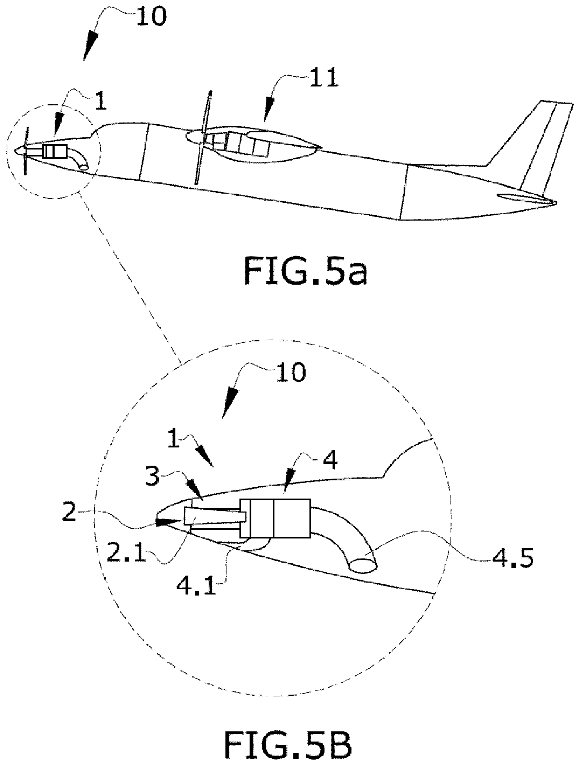

Figures 5a depicts a schematic view of an aircraft (10) comprising a turbomachinery (1) according to the invention, the aircraft (10) being intended to flight at subsonic regime. In particular, it is shown the scenario in which the aircraft already comprises at least one propulsive engine (11), in this particular case, a turboprop.

Then, two possible options are considered: firstly, that said aircraft (10) already incorporated an APU, a RAT, etc.; and, secondly that said aircraft incorporated none of them.

In the first scenario, these APU, RAT, etc. can be brought together by modifying the APU to act as a power unit (4), and providing a propeller section (2) connected to the power conversion section (3) of former APU. Thus, the former RAT (which had to be stowed within the aircraft) is placed outside the aircraft (10) thus leaving extra space available for commercial purposes.

On the contrary, in the second scenario, the current turboprop can be reconfigured to act as a turbomachinery (1) according to the present invention. As a consequence, safety is enhanced so that the turbomachinery (1) is able to continue generating power to the aircraft (10) in case of emergency.

Figure 5b depicts a detailed view of the turbomachinery (1) shown in figure 5a with folded blades. As it can be seen, the additional turbomachinery (1) to act as a turboprop is preferably placed at the nose of the aircraft (10), in order to maximize efficiency working in a tractor configuration.

This aircraft already comprises a turboprop engine (11) intended to flight at the highest speed possible (but limited to subsonic regime). Therefore, the introduction of an auxiliary turbomachinery (1) to provide surplus thrust may sometimes compromise the efficiency of the propulsive turboprop engine (11) since the turbomachinery (1) may not reach that high speed efficiently (due to its compromise solution between windmill and open-compressor functions).

Advantageously, by folding the at least two blades (2.1), the aircraft (10) already comprises a propulsive turboprop engine (11) that can flight at high speed (where they become more efficient) without penalty overall efficiency by the potential drag produced by such at least two blades (2.1) if exposed.

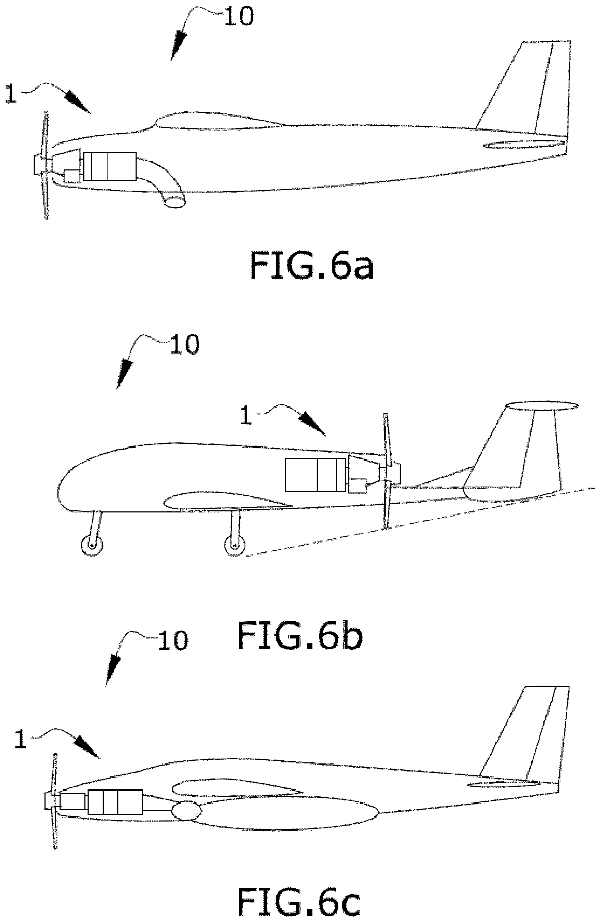

Figures 6a to 6e depict different examples of aircrafts (10) comprising a turbomachinery (1) according to the present invention. A person skilled in the art should notice that this list of intended aircraft (10) is not exhaustive, and any other which fulfils the following criteria may also be used:
- already incorporates a power unit (4), preferably a gas turbine, and
- it is intended to flight at subsonic regime, preferably below 0.7 Mach.

Nevertheless, in the event of new aircraft (10) models, the turbomachinery (1) according to the invention can be implemented from the very beginning of the development.

In short, the following figures 6a to 6e are identified with the following aircraft types (10) (which are suitable to comprise the turbomachinery (1) according to the invention):
- Fig. 6a.-: This figure depicts a schematic view of a high wing Unmanned Aerial Vehicle (UAV) with a puller propeller engine configuration.
- Fig. 6b.-: This figure depicts a schematic view of a UAV with a pusher propeller engine configuration, particularly with double-tailboom.
- Fig. 6c.-: This figure depicts a schematic view of a mid-wing Unmanned Aerial Vehicle (UAV) with a puller propeller engine configuration.

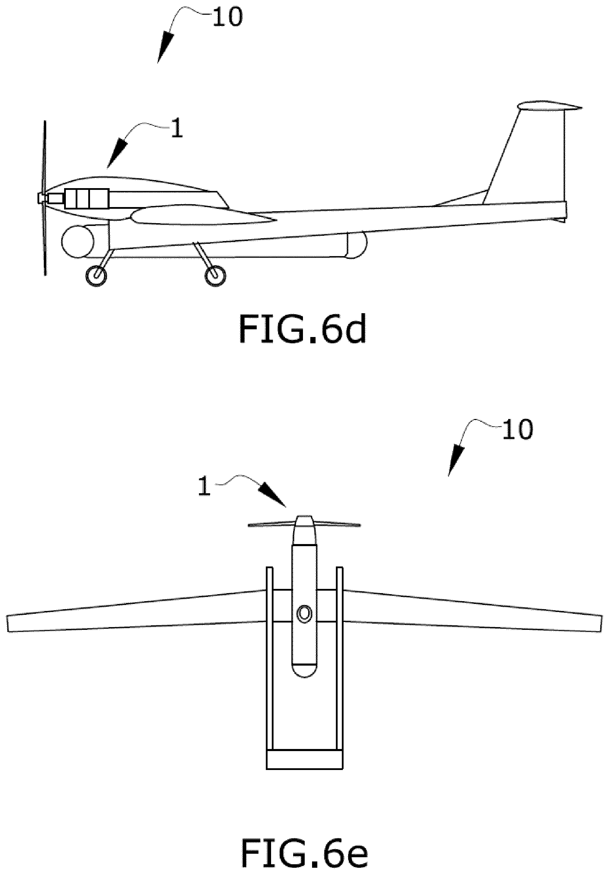

- Fig. 6d.-: This figure depicts a schematic side view of a UAV with a puller propeller engine configuration, with double-tailboom.
- Fig. 6e.-: This figure depicts a schematic top view of a UAV with a puller propeller engine configuration, with double-tailboom.

## Claims

1. Turbomachinery(1) for an aircraft (10), wherein the turbomachinery(1) comprises a common shaft sectioned in at least three parts, the turbomachinery (1) further comprising:
- a propelling section (2) associated to a first part of the shaft, wherein the propelling section (2) in turn comprises at least two blades (2.1),
- a power unit (4), preferably a gas turbine, associated to a second part of the shaft, the power unit (4) being configured to drive the turbomachinery (1),
- a power conversion section (3) associated to an intermediate part of the shaft between the first and second parts, the power conversion being drivable by either the propelling section (2), or by the power unit (4),
- a first coupling means (5) arranged between the propelling section (2) and the power conversion section (3), and configured to couple or uncouple their respective shaft parts associated, and
- a second coupling means (6) arranged between the power conversion section (3) and the power unit (4), and configured to couple or uncouple their respective shaft parts associated,
in such a way that when both first (5) and second (6) coupling means couple their respective shaft parts, the turbomachinery (1) acts as a turboprop engine, **characterized in that**
the at least two blades (2.1) of the propeller section (2) are configured to be folded once the first coupling means (5) uncouples the first part of the shaft to the remainder shaft part.

2. Turbomachinery (1) according to claim 1, wherein the turbomachinery is configured to operate in one of at least three configurations:
- a 'turboprop mode' when both coupling means (5, 6) are coupling their respective shaft parts, the entire turbomachinery (1) acting as a turboprop engine;
- a 'Ram Air Turbine mode' by uncoupling the second coupling means (6), the propelling section (2) acting as a windmill which drives the power conversion section (3); and
- an 'auxiliary power unit mode' of an aircraft by uncoupling the first coupling means (5), the power unit (4) driving the power conversion section (3).

3. Turbomachinery (1) according to any of the previous claims, wherein the propelling section (2) is of the variable pitch type.

4. Turbomachinery (1) according to any of the previous claims, wherein each of the at least two blades (2.1) are configured to be positioned in at least one of the following depending on the aircraft operation:
- 'fully feathered' position, preferably during taxiing and take-off of the aircraft;
- 'flat pitch' position, preferably during approach and landing of the aircraft; and
- 'un-feathered' position, preferably during climb and cruise of the aircraft.

5. Turbomachinery (1) according to claim 1, wherein the at least two blades (2.1) are positioned into the 'flat pitch' position during folding/un-folding maneuvers.

6. Turbomachinery (1) according to claims 2 and 4 wherein in the 'Ram Air Turbine mode', the at least two blades (2.1) are configured to be positioned into the 'un-feathered' position.

7. Turbomachinery (1) according to any of the previous claims, wherein the propelling section (2) is adapted to be arranged at the forward end of the turbomachinery, the turbomachinery (1) acting as a tractor turboprop engine.

8. Turbomachinery (1) according to any of claims 1 to 6, wherein the propelling section (2) is adapted to be arranged at the rear end of the turbomachinery, the turbomachinery (1) acting as a pushing turboprop engine.

9. Turbomachinery (1) according to any of the previous claims, wherein the turbomachinery further comprises actuation means operatively associated with the first (5) and second (6) coupling means, for coupling and uncoupling the same.

10. Turbomachinery (1) according to any of the previous claims, wherein the power conversion section (3) is configured to convert the energy from the rotation of the intermediate shaft part into at least two of the following forms:
- electrical, the power conversion section (3) comprising an electric power generator,
- pneumatic, the power conversion section (3) comprising a pneumatic pump, and/or
- hydraulic, the power conversion section (3) comprising an hydraulic pump.

11. Turbomachinery (1) according to any of the previous claims, wherein the power conversion section (3) further comprises a gearbox (3.1) within the intermediate shaft part in order to convert the high RPM of the second shaft part from the power unit into low RPM for driving the propeller section (2).

12. Turbomachinery (1) according to any of the previous claims, wherein the at least two blades (2.1) are configured to fit in a corresponding well when folded.

13. Aircraft (10) comprising a turbomachinery (1) according to any of the previous claims, wherein the aircraft (10) is at least one of the following types:
- small category aircrafts such as light aircrafts, or
- medium-sized aircraft such as regional aircraft, or
- unmanned aerial system.

14. Method for continuing driving the power conversion (3) section of a turbomachinery (1) according to any of claims 1 to 12, in case of a malfunction in the power unit (4) thereof, wherein the method comprises the steps of:
- providing a turbomachinery (1) acting as a turboprop engine by default,
- detecting a malfunction in the power unit (4) operation, such as breakdown or abnormal speed alterations,
- uncoupling the second coupling means (6), and
- the at least two blades (2.1) of the propelling section (2) forced by airstream induces rotation over the first shaft part which in turn drives the power conversion section (3).

## Patentansprüche

1. Turbomaschine (1) für ein Luftfahrzeug (10), wobei die Turbomaschine (1) eine gemeinsame Welle umfasst, die in mindestens drei Teile unterteilt ist, wobei die Turbomaschine (1) ferner Folgendes umfasst:
- einen Propellerabschnitt (2), der mit einem ersten Teil der Welle assoziiert ist, wobei der Propellerabschnitt (2) wiederum mindestens zwei Blätter (2.1) umfasst,
- eine Leistungseinheit (4), vorzugsweise eine Gasturbine, die mit einem zweiten Teil der Welle assoziiert ist, wobei die Leistungseinheit (4) dazu ausgelegt ist, die Turbomaschine (1) anzutreiben,
- einen Leistungsumwandlungsabschnitt (3), der mit einem dazwischenliegenden Teil der Welle zwischen dem ersten und dem zweiten Teil assoziiert ist, wobei die Leistungsumwandlung durch entweder den Propellerabschnitt (2) oder durch die Leistungseinheit (4) antreibbar ist,
- ein erstes Kopplungsmittel (5), das zwischen dem Propellerabschnitt (2) und dem Leistungsumwandlungsabschnitt (3) angeordnet und dazu ausgelegt ist, ihre jeweiligen assoziierten Wellenteile zu koppeln oder zu entkoppeln, und
- ein zweites Kopplungsmittel (6), das zwischen dem Leistungsumwandlungsabschnitt (3) und der Leistungseinheit (4) angeordnet und dazu ausgelegt ist, ihre jeweiligen assoziierten Wellenteile zu koppeln oder zu entkoppeln,
auf solche Weise, dass, wenn sowohl das erste (5) als auch das zweite (6) Kopplungsmittel ihre jeweiligen Wellenteile koppeln, die Turbomaschine (1) als ein Turboproptriebwerk dient,
**dadurch gekennzeichnet, dass**
die mindestens zwei Blätter (2.1) des Propellerabschnitts (2) dazu ausgelegt sind, eingeklappt zu werden, sobald das erste Kopplungsmittel (5) den ersten Teil der Welle an dem restlichen Wellenteil entkoppelt.

2. Turbomaschine (1) nach Anspruch 1, wobei die Turbomaschine dazu ausgelegt ist, in einer von mindestens drei Auslegungen zu arbeiten:
- einem "Turbopropmodus", wenn beide Kopplungsmittel (5, 6) ihre jeweiligen Wellenteile koppeln, wobei die gesamte Turbomaschine (1) als ein Turboproptriebwerk dient;
- einen "Staudruckturbinenmodus" durch Entkoppeln des zweiten Kopplungsmittels (6), wobei der Propellerabschnitt (2) als eine Windmühle dient, die den Leistungsumwandlungsabschnitt (3) antreibt; und
- einen "Hilfsleistungseinheitsmodus" eines Luftfahrzeugs durch Entkoppeln des ersten Kopplungsmittels (5), wobei die Leistungseinheit (4) den Leistungsumwandlungsabschnitt (3) antreibt.

3. Turbomaschine (1) nach einem der vorhergehenden Ansprüche, wobei der Propellerabschnitt (2) vom Typ mit variablem Anstellwinkel ist.

4. Turbomaschine (1) nach einem der vorhergehenden Ansprüche, wobei jedes der mindestens zwei Blätter (2.1) dazu ausgelegt sind, in mindestens einer der folgenden in Abhängigkeit von dem Luftfahrzeugbetrieb positioniert zu werden:
- einer "vollständigen Segel"-Stellung, vorzugsweise während eines Rollens und Startens des Luftfahrzeugs;
- einer Stellung mit "flachem Anstellwinkel", vorzugsweise während eines Anflugs und Landens des Luftfahrzeugs; und
- einer "Nicht-Segel"-Stellung, vorzugsweise während eines Steigflugs und Reiseflugs des Luftfahrzeugs.

5. Turbomaschine (1) nach Anspruch 1, wobei die mindestens zwei Blätter (2.1) während Einklapp-/Ausklappmanövern in der Stellung mit "flachem Anstellwinkel" positioniert werden.

6. Turbomaschine (1) nach Ansprüchen 2 und 4, wobei in dem "Staudruckturbinenmodus" die mindestens zwei Blätter (2.1) dazu ausgelegt sind, in der "Nicht-Segel"-Stellung positioniert zu sein.

7. Turbomaschine (1) nach einem der vorhergehenden Ansprüche, wobei der Propellerabschnitt (2) dazu eingerichtet ist, an dem vorderen Ende der Turbomaschine angeordnet zu sein, wobei die Turbomaschine (1) als ein Zugturboproptriebwerk dient.

8. Turbomaschine (1) nach einem der Ansprüche 1 bis 6, wobei der Propellerabschnitt (2) dazu eingerichtet ist, an dem hinteren Ende der Turbomaschine angeordnet zu sein, wobei die Turbomaschine (1) als ein Schubturboproptriebwerk dient.

9. Turbomaschine (1) nach einem der vorhergehenden Ansprüche, wobei die Turbomaschine ferner Betätigungsmittel umfasst, die mit dem ersten (5) und zweiten (6) Kopplungsmittel zum Koppeln und Entkoppeln derselben wirkassoziiert sind.

10. Turbomaschine (1) nach einem der vorhergehenden Ansprüche, wobei der Leistungsumwandlungsabschnitt (3) dazu ausgelegt ist, die Energie aus der Drehung des dazwischenliegenden Wellenteils in mindestens zwei der folgenden Formen umzuwandeln:
- elektrisch, wobei der Leistungsumwandlungsabschnitt (3) einen elektrischen Leistungsgenerator umfasst,
- pneumatisch, wobei der Leistungsumwandlungsabschnitt (3) eine pneumatische Pumpe umfasst, und/oder
- hydraulisch, wobei der Leistungsumwandlungsabschnitt (3) eine hydraulische Pumpe umfasst.

11. Turbomaschine (1) nach einem der vorhergehenden Ansprüche, wobei der Leistungsumwandlungsabschnitt (3) ferner ein Getriebe (3.1) in dem dazwischenliegenden Wellenteil umfasst, um die hohe Drehzahl des zweiten Wellenteils von der Leistungseinheit in eine niedrige Drehzahl zum Antreiben des Propellerabschnitts (2) umzuwandeln.

12. Turbomaschine (1) nach einem der vorhergehenden Ansprüche, wobei die mindestens zwei Blätter (2.1) dazu ausgelegt sind, im zusammengeklappten Zustand in eine entsprechende Aussparung zu passen.

13. Luftfahrzeug (10), umfassend eine Turbomaschine (1) nach einem der vorhergehenden Ansprüche, wobei das Luftfahrzeug (10) mindestens eines der folgenden Typen ist:
- Luftfahrzeuge kleiner Kategorien, wie etwa Leichtluftfahrzeuge, oder
- ein Luftfahrzeug mittlerer Größe, wie etwa ein Regionalluftfahrzeug, oder
- ein unbemanntes Luftfahrtsystem.

14. Verfahren zum Fortsetzen eines Antreibens des Leistungsumwandlungs(3)-Abschnitts einer Turbomaschine (1) nach einem der Ansprüche 1 bis 12 im Fall einer Fehlfunktion in der Leistungseinheit (4) davon, wobei das Verfahren die folgenden Schritte umfasst:
- Bereitstellen einer Turbomaschine (1), die standardmäßig als ein Turboproptriebwerk dient,
- Detektieren einer Fehlfunktion im Betrieb der Leistungseinheit (4), wie etwa einen Ausfall oder abnormale Drehzahlveränderungen,
- Entkoppeln des zweiten Kopplungsmittels (6), und
- wobei die mindestens zwei Blätter (2.1) des Propellerabschnitts (2), die einer Kraft eines Luftstroms ausgesetzt sind, eine Drehung über den ersten Wellenteil induzieren, die wiederum den Leistungsumwandlungsabschnitt (3) antreibt.

## Revendications

1. Turbomachine (1) pour un aéronef (10), dans laquelle la turbomachine (1) comprend un arbre commun sectionné en au moins trois parties, la turbomachine (1) comprenant en outre :
- une section de propulsion (2) associée à une première partie de l'arbre, dans laquelle la section de propulsion (2) comprend à son tour au moins deux aubes (2.1),
- une unité de puissance (4), de préférence une turbine à gaz, associée à une seconde partie de l'arbre, l'unité de puissance (4) étant configurée pour entraîner la turbomachine (1),
- une section de conversion de puissance (3) associée à une partie intermédiaire de l'arbre entre les première et seconde parties, la conversion de puissance pouvant être entraînée soit par la section de propulsion (2), soit par l'unité de puissance (4),
- un premier moyen de couplage (5) agencé entre la section de propulsion (2) et la section de conversion de puissance (3), et configuré pour coupler ou découpler leurs parties d'arbre respectives associées, et
- un second moyen de couplage (6) agencé entre la section de conversion de puissance (3) et l'unité de puissance (4), et configuré pour coupler ou découpler leurs parties d'arbre respectives associées,
de telle manière que lorsque le premier moyen de couplage (5) et le second moyen de couplage (6) tous les deux couplent leurs parties d'arbre respectives, la turbomachine (1) agit comme un turbopropulseur, **caractérisée en ce que** les au moins deux aubes (2.1) de la section de propulsion (2) sont configurées pour être pliées une fois que le premier moyen de couplage (5) découple la première partie de l'arbre de la partie d'arbre restante.

2. Turbomachine (1) selon la revendication 1, dans laquelle la turbomachine est configurée pour fonctionner dans l'une d'au moins trois configurations :
- un « mode turbopropulseur » lorsque les deux moyens de couplage (5, 6) couplent leurs parties d'arbre respectives, la turbomachine (1) entière agissant comme un turbopropulseur ;
- un « mode éolienne de secours » en découplant le second moyen de couplage (6), la section de propulsion (2) agissant comme un moulin à vent qui entraîne la section de conversion de puissance (3) ; et
- un « mode unité de puissance auxiliaire » d'un aéronef en découplant le premier moyen de couplage (5), l'unité de puissance (4) entraînant la section de conversion de puissance (3).

3. Turbomachine (1) selon l'une quelconque des revendications précédentes, dans laquelle la section de propulsion (2) est du type à pas variable.

4. Turbomachine (1) selon l'une quelconque des revendications précédentes, dans laquelle chacune des au moins deux aubes (2.1) sont configurées pour être positionnées dans au moins l'une de ce qui suit en fonction du fonctionnement de l'aéronef :
- une position de « mise en drapeau totale », de préférence pendant le roulage et le décollage de l'aéronef ;
- une position « d'angle plat », de préférence pendant l'approche et l'atterrissage de l'aéronef ; et
- une position de « retour de drapeau », de préférence pendant l'action à cabrer et la croisière de l'aéronef.

5. Turbomachine (1) selon la revendication 1, dans laquelle les au moins deux aubes (2.1) sont positionnées dans la position « d'angle plat » pendant des manœuvres de pliage/dépliage.

6. Turbomachine (1) selon les revendications 2 et 4 dans laquelle dans le « mode éolienne de secours », les au moins deux aubes (2.1) sont configurées pour être positionnées dans la position de « retour de drapeau ».

7. Turbomachine (1) selon l'une quelconque des revendications précédentes, dans laquelle la section de propulsion (2) est adaptée pour être agencée au niveau de l'extrémité avant de la turbomachine, la turbomachine (1) agissant comme un turbopropulseur de traction.

8. Turbomachine (1) selon l'une quelconque des revendications 1 à 6, dans laquelle la section de propulsion (2) est adaptée pour être agencée au niveau de l'extrémité arrière de la turbomachine, la turbomachine (1) agissant comme un turbopropulseur de poussée.

9. Turbomachine (1) selon l'une quelconque des revendications précédentes, dans laquelle la turbomachine comprend en outre un moyen d'actionnement associé de manière opérationnelle aux premier (5) et second (6) moyens de couplage, pour les coupler et les découpler.

10. Turbomachine (1) selon l'une quelconque des revendications précédentes, dans laquelle la section de conversion de puissance (3) est configurée pour convertir l'énergie provenant de la rotation de la partie d'arbre intermédiaire en au moins deux des formes suivantes :
- électrique, la section de conversion de puissance (3) comprenant un générateur de puissance électrique,
- pneumatique, la section de conversion de puissance (3) comprenant une pompe pneumatique, et/ou
- hydraulique, la section de conversion de puissance (3) comprenant une pompe hydraulique.

11. Turbomachine (1) selon l'une quelconque des revendications précédentes, dans laquelle la section de conversion de puissance (3) comprend en outre une boîte de vitesses (3.1) à l'intérieur de la partie d'arbre intermédiaire afin de convertir la vitesse de rotation (RPM) élevée de la seconde partie d'arbre provenant de l'unité de puissance en vitesse de rotation (RPM) faible pour entraîner la section de propulsion (2).

12. Turbomachine (1) selon l'une quelconque des revendications précédentes, dans laquelle les au moins deux aubes (2.1) sont configurées pour s'ajuster dans un puits correspondant lorsqu'elles sont pliées.

13. Aéronef (10) comprenant une turbomachine (1) selon l'une quelconque des revendications précédentes, dans lequel l'aéronef (10) est au moins l'un parmi les types suivants :
- aéronefs de petite catégorie tels que les aéronefs légers, ou
- aéronef de taille moyenne tel qu'un aéronef régional, ou
- système aérien sans pilote.

14. Procédé pour continuer d'entraîner la section de conversion de puissance (3) d'une turbomachine (1) selon l'une quelconque des revendications 1 à 12, en cas de dysfonctionnement dans l'unité de puissance (4) de celle-ci, dans lequel le procédé comprend les étapes suivantes :
- la fourniture d'une turbomachine (1) agissant comme un turbopropulseur par défaut,
- la détection d'un dysfonctionnement dans le fonctionnement de l'unité de puissance (4), tel qu'une panne ou des changements de vitesse anormaux,
- le découplage du second moyen de couplage (6), et
- les au moins deux aubes (2.1) de la section de propulsion (2) forcées par un flux d'air entraînent une rotation de la première partie d'arbre qui à son tour entraîne la section de conversion de puissance (3).
